# EUROPEAN PATENT APPLICATION

(11) **EP 4 383 875 A1**
(43) Date of publication of application: **12.06.2024**
(21) Application number: 21952321.4
(22) Date of filing: 05.08.2021
(51) Int. Cl.: H04W 72/04

(54) **BANDWIDTH PART SYNCHRONIZATION METHOD AND APPARATUS THEREOF**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/110943
(87) International publication number: WO 2023/010429

(57) **Abstract**

Embodiments of the present application disclose a bandwidth part (BWP) synchronization method and an apparatus thereof, which can be applied to the technical field of communications. The method is executed by a terminal device, and comprises: determining a BWP configured by two or more uplink access processes; determining to execute a first uplink access process, then activating a first BWP corresponding to the first uplink access process, wherein the first uplink access process is any one of the two or more uplink access processes. By means of implementing the embodiments of the present application, the terminal device may confirm the activation of a corresponding BWP according to the executed uplink access process. By means of the foregoing manner, a network device and the terminal device may maintain a consistent understanding of BWP frequency domain resources used by the terminal device, thereby preventing signal transmission loss.

## Description

### TECHNICAL FIELD

The disclosure relates to the field of communication technologies, and more particularly, to a method and an apparatus for synchronizing bandwidth parts (BWPs).

### BACKGROUND

During different uplink access procedures, a terminal device works on different BWPs. In the related art, a network device and a terminal device may have different understandings for BWP frequency-domain resources that the terminal device is currently working on, resulting in signals being lost.

### SUMMARY

A method and an apparatus for synchronizing BWPs are provided according to embodiments of the disclosure, which may be applicable to the field of communication technologies and the like.

According to a first aspect of embodiment of the disclosure, a method for synchronizing BWPs is provided and performed by a terminal device. The method includes: determining BWPs configured for two or more uplink access procedures; and determining to perform a first uplink access procedure, and activating a first BWP corresponding to the first uplink access procedure, in which the first uplink access procedure is any one of the two or more uplink access procedures.

By implementing the disclosure, the terminal device may be confirmed to determine and activate the corresponding BWP according to the performed uplink access procedure. In this way, for the network device and the terminal device, understandings for BWP frequency-domain resources used by the terminal device may be consistent, thereby avoiding the signal transmission loss.

In an implementation, the method further includes: deactivating a BWP that is in an activated state before performing the first uplink access procedure.

In an implementation, the method further includes: determining to hand over to a second uplink access procedure from the first uplink access procedure, and activating a second BWP corresponding to the second uplink access procedure, and/or deactivating the first BWP.

In an implementation, the method further includes: receiving a deactivation indication transmitted by a network device, in which the deactivation indication is used to indicate the terminal device to deactivate a currently activated BWP, and the currently activated BWP is configured for an uplink access procedure currently performed by the terminal device; and activating a third BWP configured by the network device or agreed in a protocol.

In an implementation, the method further includes: monitoring a handover trigger event, and determining to hand over to the second uplink access procedure from the first uplink access procedure under a case that the handover trigger event is monitored.

In an implementation, the handover trigger event includes at least one of: receiving handover indication information transmitted by a network device, in which the handover indication information is used to indicate the terminal device to hand over to the second uplink access procedure from the first uplink access procedure; monitoring that a measurement result of the first uplink access procedure no longer satisfies a measurement threshold for selecting the first uplink access procedure; or monitoring that a number of uplink transmission failures of the first uplink access procedure reaches a threshold.

In an implementation, the first BWP and the second BWP overlap.

In an implementation, different uplink access procedures are configured with different BWPs.

In an implementation, the configured BWP is a BWP used when the terminal device is in an idle state or a deactivated state.

In an implementation, the uplink access procedure includes any of: a small data transmission (SDT) procedure; a random access channel (RACH) SDT procedure; a configure grant (CG) SDT procedure; or a non-SDT uplink access procedure.

In an implementation, the BWP includes at least one of uplink BWP indication information or downlink BWP indication information.

In an implementation, the BWP indication information includes at least one of a BWP identifier or a BWP type indication.

In an implementation, the method further includes: receiving a BWP configured by a network device for each uplink access procedure.

In an implementation, the method further includes: determining an initial state of the BWP configured for each uplink access procedure according to a protocol agreement; or receiving state indication information transmitted by the network device, in which the state indication information is used to indicate the initial state of the BWP configured.

In an implementation, the initial state of the BWP is one of an activated state, a deactivated state, or a dormant state.

In an implementation, the method further includes: determining that the terminal device is in an idle state or a deactivated state, and determining a currently activated BWP as a BWP where the terminal device currently resides.

In an implementation, the method further includes: determining that the terminal device is in an idle state or a deactivated state, and performing, on a specified BWP, a cell measurement on a cell where the terminal device resides, in which the specified BWP includes one of an initial BWP, a currently activated BWP, and a protocol-agreed BWP.

According to a second aspect of embodiment of the disclosure, a method for synchronizing BWPs is provided and performed by a network device. The method includes: configuring BWPs for two or more uplink access procedures of a terminal device, in which the uplink access procedures are performed by the terminal device on the respective configured BWPs.

By implementing the disclosure, the terminal device may be confirmed to determine and activate the corresponding BWP according to the performed uplink access procedure. In this way, for the network device and the terminal device, understandings for BWP frequency-domain resources used by the terminal device may be consistent, thereby avoiding the signal transmission loss.

In an implementation, the method further includes: transmitting a deactivation indication to the terminal device, in which the deactivation indication is used to indicate the terminal device to deactivate a currently activated BWP, and the currently activated BWP is configured for an uplink access procedure currently performed by the terminal device.

In an implementation, the method further includes: configuring a third BWP to the terminal device, in which the third BWP is used to be activated by the terminal device.

In an implementation, the method further includes: transmitting handover indication information to the terminal device, in which the handover indication information is used to indicate the terminal device to hand over to a second uplink access procedure from a first uplink access procedure.

In an implementation, the first BWP and the second BWP overlap.

In an implementation, different uplink access procedures are configured with different BWPs.

In an implementation, the configured BWP is a BWP used when the terminal device is in an idle state or a deactivated state.

In an implementation, the uplink access procedure includes any of: an SDT procedure; an RACH SDT procedure; a CG SDT procedure; or a non-SDT uplink access procedure.

In an implementation, the BWP includes at least one of uplink BWP indication information or downlink BWP indication information.

In an implementation, the BWP indication information includes at least one of a BWP identifier or a BWP type indication.

In an implementation, the method further includes: transmitting state indication information to the terminal device, in which the state indication information is used to indicate an initial state of the configured BWP.

According to a third aspect of embodiment of the disclosure, a communication apparatus is provided. The communication apparatus has some or all functions of realizing the terminal device in the method according to the first aspect described above, for example, functions of the communication apparatus may have some or all functions according to the disclosure, or functions of independently implementing according to any one of the embodiments in the disclosure. The functions described above may be implemented by hardware or by executing corresponding software on the hardware. The hardware or software includes one or more units or modules corresponding to the above functions.

In an implementation, the communication apparatus may include a transceiver module and a processing module. The processing module is configured to support the communication apparatus to perform corresponding functions according to the foregoing methods. The transceiver module is configured to support communication between the communication apparatus and other devices. The communication apparatus may further include a storage module, which is configured to be coupled with the transceiver module and the processing module, and store necessary computer programs and data of the communication apparatus.

For example, the processing module may be a processor, the transceiver module may be a transceiver or a communication interface, and the storage module may be a memory.

According to a fourth aspect of embodiment of the disclosure, another communication apparatus is provided. The communication apparatus has some or all functions of realizing the network device in the method according to the second aspect described above, for example, functions of the communication apparatus may have some or all functions according to the disclosure, or functions of independently implementing according to any one of the embodiments in the disclosure. The functions described above may be implemented by hardware or by executing corresponding software on the hardware. The hardware or software includes one or more units or modules corresponding to the above functions.

In an implementation, the communication apparatus may include a transceiver module and a processing module. The processing module is configured to support the communication apparatus to perform corresponding functions according to the foregoing methods. The transceiver module is configured to support communication between the communication apparatus and other devices. The communication apparatus may further include a storage module, which is configured to be coupled with the transceiver module and the processing module, and store necessary computer programs and data of the communication apparatus.

For example, the processing module may be a processor, the transceiver module may be a transceiver or a communication interface, and the storage module may be a memory.

According to a fifth aspect of embodiment of the disclosure, a communication device is provided. The communication device includes a processor, and when the processor invokes a computer program in a memory, the processor performs the method described above according to the first aspect.

According to a sixth aspect of embodiment of the disclosure, a communication device is provided. The communication device includes a processor, and when the processor invokes a computer program in a memory, the processor performs the method described above according to the second aspect.

According to a seventh aspect of embodiment of the disclosure, a communication device is provided. The communication device includes a processor and a memory. A computer program is stored in the memory; and the processor performs the computer program stored in the memory, so that the communication device performs the method described above according to the first aspect.

According to an eighth aspect of embodiment of the disclosure, a communication device is provided. The communication device includes a processor and a memory. A computer program is stored in the memory; and the processor performs the computer program stored in the memory, so that the communication device performs the method described above according to the second aspect.

According to a ninth aspect of embodiment of the disclosure, a communication device is provided. The includes a processor and an interface circuit. The interface circuit is configured to receive code instructions and transmit them to the processor, and the processor is configured to execute the code instructions to make the device to perform the method described above according to the first aspect.

According to a tenth aspect of embodiment of the disclosure, a communication device is provided. The includes a processor and an interface circuit. The interface circuit is configured to receive code instructions and transmit them to the processor, and the processor is configured to execute the code instructions to make the device to perform the method described above according to the second aspect.

According to an eleventh aspect of embodiment of the disclosure, a system for synchronizing BWPs is provided. The system includes the communication apparatus described in the third aspect and the communication apparatus described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

According to a twelfth aspect of embodiment of the disclosure, a computer-readable storage medium is provided and is configured to store instructions used by the above-mentioned terminal device, and when the instructions are executed, the terminal device performs the above-mentioned method according to the first aspect.

According to a thirteenth aspect of embodiment of the disclosure, a readable storage medium is provided and is configured to store instructions used by the above-mentioned network device, and when the instructions are executed, the network device performs the above-mentioned method according to the second aspect.

According to a fourteenth aspect of embodiment of the disclosure, a computer program product including a computer program is provided. When the computer program product runs on a computer, the computer is caused to perform the method described above according to the first aspect.

According to a fifteenth aspect of embodiment of the disclosure, a computer program product including a computer program is provided. When the computer program product runs on a computer, the computer is caused to perform the method described above according to the second aspect.

According to a sixteenth aspect of embodiment of the disclosure, a chip system is provided. The chip system includes at least one processor and an interface and used to support the terminal device to realize the functions involved according to the first aspect, for example, determine or process at least one of data and information involved according to the above method. In a possible design, the chip system further includes a memory, and the memory is configured to store necessary computer programs and data of the terminal device. The chip system may include chips, or may include chips and other discrete devices.

According to a seventeenth aspect of embodiment of the disclosure, a chip system is provided. The chip system includes at least one processor and an interface and used to support the network device to realize the functions involved according to the second aspect, for example, determine or process at least one of data and information involved according to the above method. In a possible design, the chip system further includes a memory, and the memory is configured to store necessary computer programs and data of the network device. The chip system may include chips, or may include chips and other discrete devices.

According to an eighteenth aspect of embodiment of the disclosure, a computer program is provided. When the computer program runs on a computer, the computer is caused to perform the method described above according to the first aspect.

According to a nineteenth aspect of embodiment of the disclosure, a computer program is provided. When the computer program runs on a computer, the computer is caused to perform the method described above according to the second aspect.

### BRIEF DESCRIPTION OF THE DRAWINGS

To more clearly illustrate technical solutions according to embodiments of the disclosure or according to the related art, the following describes the drawings that need to be used according to the embodiments of the disclosure or according to the related art.
FIG. 1 is a schematic block diagram of a communication system according to some embodiments of the disclosure.
FIG. 2 is a schematic flowchart of a method for synchronizing BWPs according to some embodiments of the disclosure.
FIG. 3 is a schematic flowchart of a method for synchronizing BWPs according to some embodiments of the disclosure.
FIG. 4 is a schematic flowchart of a method for synchronizing BWPs according to some embodiments of the disclosure.
FIG. 5 is a schematic flowchart of a method for synchronizing BWPs according to some embodiments of the disclosure.
FIG. 6 is a schematic flowchart of a method for synchronizing BWPs according to some embodiments of the disclosure.
FIG. 7 is a schematic flowchart of a method for synchronizing BWPs according to some embodiments of the disclosure.
FIG. 8 is a schematic flowchart of a method for synchronizing BWPs according to some embodiments of the disclosure.
FIG. 9 is a schematic flowchart of a method for synchronizing BWPs according to some embodiments of the disclosure.
FIG. 10 is a schematic block diagram of a communication apparatus according to some embodiments of the disclosure.
FIG. 11 is a schematic block diagram of a communication device according to some embodiments of the disclosure.
FIG. 12 is a schematic block diagram of a chip according to some embodiments of the disclosure.

### DETAILED DESCRIPTION

Terms involved according to the disclosure are firstly introduced for ease of understanding.

### 1. Bandwidth Part (BWP)

When a terminal device is transmitting or receiving data, a network device may specify a frequency range on which the terminal device works, that is, the BWP.

To better understand a method for synchronizing BWPs according to embodiments of the disclosure, a communication system to which embodiments of the disclosure applies is firstly described below.

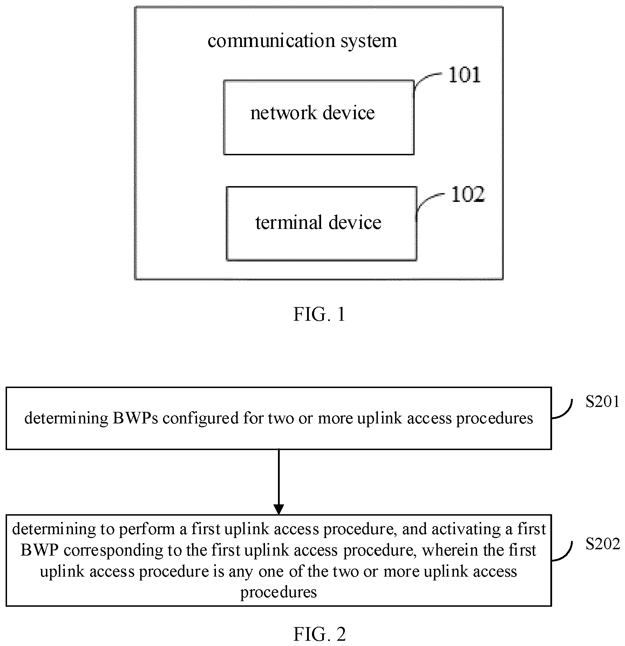

Referring to FIG. 1, FIG. 1 is a schematic block diagram of a communication system according to some embodiments of the disclosure. The communication system may include, but is not limited to, a network device and a terminal device. The number and form of devices in FIG. 1 are for example only and do not constitute a limitation according to the embodiments of the disclosure. In practical applications, two or more network device, or two or more terminal devices are included. The communication system in FIG. 1 includes one network device 101 and one terminal device 102 as an example.

It should be noted that technical solutions according to embodiments of the disclosure may be applied to various communication systems. For example: long term evolution (LTE) system, fifth generation (5G) mobile communication system, 5G new radio (NR) system, other future new mobile communication systems, or the like.

The network device 101 according to embodiments of the disclosure is an entity on a network side for transmitting or receiving signals. For example, the network device 101 may be an evolved base station (evolved NodeB, eNB), a transmission reception point (TRP), a next generation base station (next generation NodeB, gNB) in an NR system, a base station in other future mobile communication systems, an access node in a wireless fidelity (Wi-Fi) system, or the like. The specific technology and specific device form adopted by the network device according to embodiments of the disclosure is not limited. The network device according to some embodiments of the disclosure may include a central unit (CU) and a distributed unit (DU), where the CU may also be called a control unit. The CU-DU structure may separate the protocol layers of the network device, such as the base station. Functions of some protocol layers are placed in the CU for centralized control, and functions of the remaining part or all of the protocol layers are distributed in the DU. The CU centrally controls the DU.

The terminal device 102 according to embodiments of the disclosure is an entity on a user side for receiving or transmitting signals, such as a mobile phone. The terminal device may also be called a terminal, a user equipment (UE), a mobile station (MS), a mobile terminal (MT), or the like. The terminal device may be a car with a communication function, a smart car, a mobile phone, a wearable device, a Pad, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal devices in smart home, or the like. The specific technology and specific device form adopted by the terminal device according to embodiments of the disclosure is not limited.

It should be understood that the communication system described according to embodiments of the disclosure is to illustrate the technical solutions according to embodiments of the disclosure more clearly, and does not constitute a limitation to the technical solutions according to embodiments of the disclosure. With the evolution of the system architecture and the emergence of new service scenarios, the technical solutions according to embodiments of the disclosure are also applicable to similar technical problems for those skilled in the art.

The method and the apparatus for synchronizing BWPs according to disclosure will be described in detail below with reference to the accompanying drawings.

Referring to FIG. 2, FIG. 2 is a schematic flowchart of a method for synchronizing BWPs according to some embodiments of the disclosure. As illustrated in FIG. 2, the method is performed by the terminal device and may include but not limited to the following steps.

S201, BWPs configured for two or more uplink access procedures are determined.

Optionally, the uplink access procedures include the following types: a small data transmission (SDT) procedure, a random access channel (RACH) SDT procedure, a configure grant (CG) SDT procedure, and a non-SDT uplink access procedure. According to the disclosure, the two and two uplink access procedures refer to any combination of two or more of the above-mentioned uplink access procedures.

As a possible implementation, the BWPs for the two or more uplink access procedures may be stipulated in a protocol.

As another possible implementation, the network device may configure the BWPs the for two or more uplink access procedures. Optionally, the network device transmits configuration information to the terminal device and the configuration information carries the BWPs of the two or more uplink access procedures. Optionally, the network device may respectively configure the BWPs for the two or more uplink access procedures through different configuration information.

Taking the configuration of the BWP of the CG SDT procedure as an example, the network device configures the CG resource of the CG SDT procedure of cell 1 to the terminal device and configures BWP1 for the CG resource, through the radio resource control release (RRCRelease) message. Correspondingly, the terminal device may determine the CG resource of the CG SDT procedure and BWP1 corresponding to the CG resource from the RRCRelease message, that is, BWP1 for the CG SDT procedure is configured.

It should be noted that the terminal device in an idle state or a deactivated state works on the initial BWP configured by the network device, such as performing the connection establishment procedure or the connection resume procedure; and for the terminal device in an activated state, the network device may configure respective BWPs of the two or more uplink access procedures for the terminal device.

Optionally, each uplink access procedure may be configured with a BWP, and different uplink access procedures may be configured with different BWPs.

Optionally, the BWP includes at least one of uplink BWP indication information or downlink BWP indication information, and the BWP indication information includes at least one of a BWP identifier or a BWP type indication.

Optionally, when the network device configures the BWP for the terminal device, the initial state of the BWP may be specified in a protocol, for example, the initial state of the BWP configured for each uplink access procedure is determined in the protocol.

Optionally, when the network device configures the BWP for the terminal device, the network device may indicate the initial state of the BWP, for example, the state indication information is transmitted by the network device to the terminal device, and the state indication information is used to indicate the initial state of the configured BWP. The initial state of the BWP is one of an activated state, a deactivated state, or a dormant state.

S202, it is determined to perform a first uplink access procedure, and a first BWP corresponding to the first uplink access procedure is activated, in which the first uplink access procedure is any one of the two or more uplink access procedures.

According to some embodiments of the disclosure, the uplink access procedure performed by the terminal device is referred to as the first uplink access procedure.

In some implementations, after confirming that the first uplink access procedure performed by the terminal device is the SDT procedure, the first BWP corresponding to the SDT procedure is activated.

In some implementations, after confirming that the first uplink access procedure performed by the terminal device is the RACH SDT procedure, the first BWP corresponding to the RACH SDT procedure is activated.

In some implementations, after confirming that the first uplink access procedure performed by the terminal device is the CG SDT procedure, the first BWP corresponding to the CG SDT procedure is activated.

In some implementations, after confirming that the first uplink access procedure performed by the terminal device is the non-SDT uplink access procedure, the first BWP corresponding to the non-SDT uplink access procedure is activated.

For example, the network device configures BWP-1 for the CG resource of the CG SDT procedure of cell 1. The terminal device currently resides in cell 1, and the BWP where the terminal device resides is the initial BWP. That is, the BWP currently activated by the terminal is the initial BWP. In response to the terminal triggering the SDT procedure in cell 1 and performing the CG SDT procedure, since BWP-1 is not the currently activated BWP, the terminal device activates BWP-1.

In some implementations, it is determined that the terminal device is in an idle state or a deactivated state, and on a specified BWP, a cell measurement is performed on a cell where the terminal device resides. The specified BWP includes one of an initial BWP, a currently activated BWP, or a protocol-agreed BWP.

According to some embodiments of the disclosure, to make the network device and the terminal device have the same understanding for the BWP frequency-domain resources that the terminal device is currently working on, the BWPs configured for the two or more uplink access procedure are determined for the terminal device, any one of the two or more uplink access procedures may be used as the first uplink access procedure, and when the terminal device performs the first uplink access procedure, the first BWP corresponding to the first uplink access procedure is activated. By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss.

The method for synchronizing BWPs according to some embodiments of the disclosure also includes the following steps.

Optionally, according to some embodiments of the disclosure, after it is determined that the terminal device performs the first uplink access procedure, the BWP that is in an activated state before performing the first uplink access procedure needs to be deactivated. For example, the first uplink access procedure is the SDT procedure. Before performing the SDT procedure, the terminal device is in the RACH SDT procedure. After the SDT procedure is performed, the first BWP corresponding to the SDT procedure needs to be activated. Further, the BWP corresponding to the RACH SDT procedure is deactivated. According to the disclosure, the situation that there are two activated BWPs at the same time may be avoided, and the waste of frequency-domain resources and the problem of easy loss of signal transmission may be avoided.

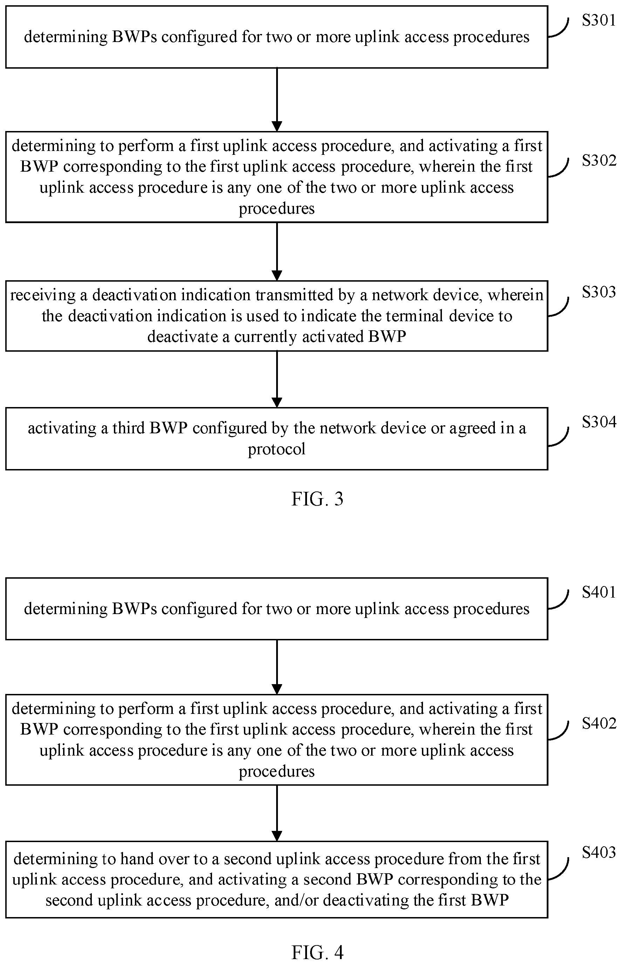

Referring to FIG. 3, FIG. 3 is a schematic flowchart of a method for synchronizing BWPs according to some embodiments of the disclosure. As illustrated in FIG. 3, the method is performed by the terminal device and may include but not limited to the following steps.

S301, BWPs configured for two or more uplink access procedures are determined.

S302, it is determined to perform a first uplink access procedure, and a first BWP corresponding to the first uplink access procedure is activated, in which the first uplink access procedure is any one of the two or more uplink access procedures.

For the relevant content of step S301 and step S302, reference should be made to the relevant introduction of the above embodiments, and details are not repeated herein.

S303, a deactivation indication transmitted by a network device is received, in which the deactivation indication is used to indicate the terminal device to deactivate a currently activated BWP, and the currently activated BWP is configured for an uplink access procedure currently performed by the terminal device.

In some implementations, when the currently activated BWP of the terminal device needs to be deactivated, the network device transmits the deactivation indication to the terminal device, in which the deactivation indication is used to indicate the terminal device to deactivate the currently activated BWP.

According to some embodiments of the disclosure, the currently activated BWP is a BWP configured for the uplink access procedure currently performed by the terminal device.

S304, a third BWP configured by the network device or agreed in a protocol is activated.

After deactivating the first BWP, the terminal device needs to activate the third BWP to continue to communicate with the network device. Optionally, the third BWP may be agreed upon in the protocol, for example, the third BWP may be an initial BWP. Optionally, the third BWP may also be configured by the network device to the terminal device, for example, the network device configures the third BWP as the initial BWP to the terminal device. According to the disclosure, when the third BWP is the initial BWP, the terminal device may activate the initial BWP.

In some implementations, the terminal device performs the CG SDT procedure on BWP-1, and the terminal device receives the deactivation indication transmitted by the network device. The terminal device deactivates the currently activated BWP-1. If the third BWP configured by the network device or stipulated in the protocol is the initial BWP, the terminal device may activate the initial BWP.

In some implementations, the terminal device performs a random access procedure on initial BWP-2, and the terminal device receives the deactivation indication transmitted by the network device. The terminal device deactivates the currently activated initial BWP-2, and activates the initial BWP-1 according to the protocol agreement. If the third BWP configured by the network device or stipulated in the protocol is the initial BWP, the terminal device may activate the initial BWP.

By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss.

Referring to FIG. 4, FIG. 4 is a schematic flowchart of a method for synchronizing BWPs according to some embodiments of the disclosure. As illustrated in FIG. 4, the method is performed by the terminal device and may include but not limited to the following steps.

S401, BWPs configured for two or more uplink access procedures are determined.

S402, it is determined to perform a first uplink access procedure, and a first BWP corresponding to the first uplink access procedure is activated, in which the first uplink access procedure is any one of the two or more uplink access procedures.

For the relevant content of step S401 and step S402, reference should be made to the relevant introduction of the above embodiments, and details are not repeated herein.

S403, it is determined to hand over to a second uplink access procedure from the first uplink access procedure, and a second BWP corresponding to the second uplink access procedure is activated, and/or the first BWP is deactivated.

In some implementations, when the service applied by the terminal device changes, the uplink access procedure may change, and the terminal device may hand over to the second uplink access procedure from the first uplink access procedure.

It should be noted that the BWP corresponding to the first uplink access procedure is called the first BWP, and the BWP corresponding to the second uplink access procedure is called the second BWP.

In some implementations, when it hands over to the second uplink access procedure from the first uplink access procedure, the second BWP corresponding to the second uplink access procedure is activated.

In some implementations, when it hands over to the second uplink access procedure from the first uplink access procedure, the first BWP is deactivated.

In some implementations, when it hands over to the second uplink access procedure from the first uplink access procedure, the second BWP corresponding to the second uplink access procedure is activated and the first BWP is deactivated.

Optionally, the first BWP overlaps with the second BWP. Optionally, the first BWP includes the second BWP, for example, if the frequency range of the second BWP is 2.4GHz-2.5GHz, the frequency range of the first BWP is 2.43GHz-2.48GHz.

By implementing according to embodiments of the disclosure, the terminal device may be confirmed to activate the corresponding BWP according to the performed uplink access procedure. When the service applied by the terminal device changes, the BWP synchronization adjustment may also be maintained after the uplink access procedure handover. In this way, for the network device and the terminal device, the understandings for the BWP frequency-domain resources used by the terminal device may be consistent, thereby avoiding the signal transmission loss.

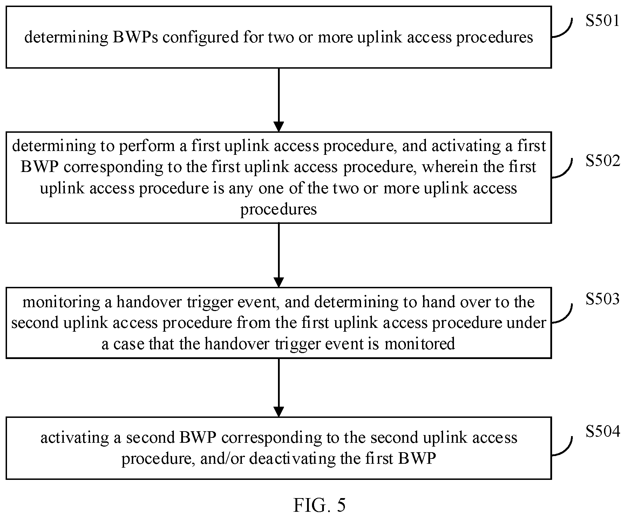

Referring to FIG. 5, FIG. 5 is a schematic flowchart of a method for synchronizing BWPs according to some embodiments of the disclosure. As illustrated in FIG. 5, the method is performed by the terminal device and may include but not limited to the following steps.

S501, BWPs configured for two or more uplink access procedures are determined.

S502, it is determined to perform a first uplink access procedure, and a first BWP corresponding to the first uplink access procedure is activated, in which the first uplink access procedure is any one of the two or more uplink access procedures.

For the relevant content of step S501 and step S502, reference should be made to the relevant introduction of the above embodiments, and details are not repeated herein.

S503, a handover trigger event is monitored, and it is determined to hand over to the second uplink access procedure from the first uplink access procedure under a case that the handover trigger event is monitored.

In some implementations, in response to the terminal device receiving the handover indication information from the network device, it is determined that the handover trigger event is monitored; in which the handover indication information is used to indicate the terminal device to hand over to the second uplink access procedure from the first uplink access procedure. Optionally, a radio resource control (RRC) message may be used as a handover instruction message. Optionally, a media access control (MAC) control element (CE) or downlink control information (DCI) may be used as a handover indication message.

In some implementations, in response to monitoring that a measurement result of the first uplink access procedure no longer satisfies a measurement threshold for selecting the first uplink access procedure, it is determined that a handover trigger event is monitored.

In some implementations, in response to monitoring that a number of uplink transmission failures of the first uplink access procedure reaches a threshold, it is determined that a handover trigger event is monitored.

After monitoring the handover trigger event, the terminal device further determines to hand over to the second uplink access procedure from the first uplink access procedure.

S504, a second BWP corresponding to the second uplink access procedure is activated, and/or the first BWP is deactivated.

For the relevant content of step S504, reference should be made to the relevant introduction of the above embodiments, and details are not repeated herein.

By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss.

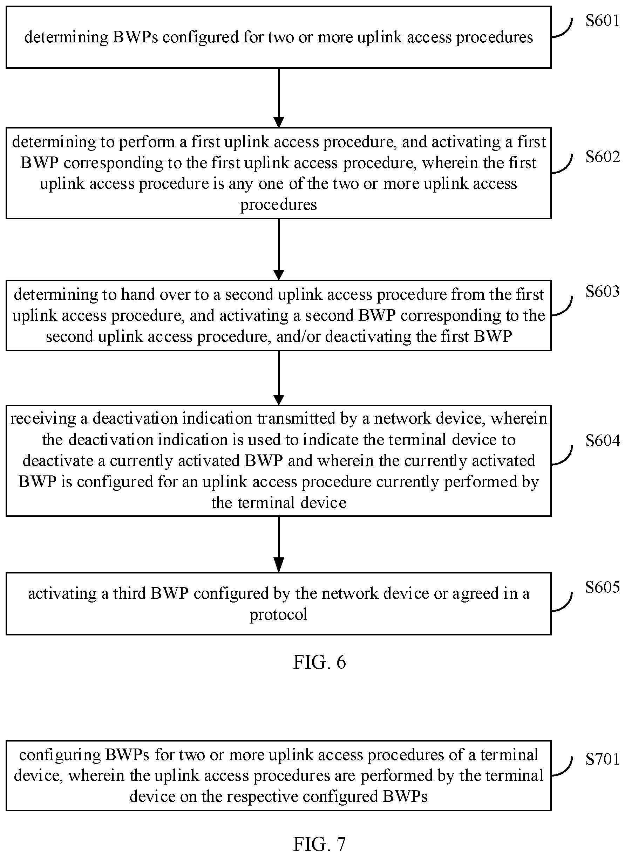

Referring to FIG. 6, FIG. 6 is a schematic flowchart of a method for synchronizing BWPs according to some embodiments of the disclosure. As illustrated in FIG. 6, the method is performed by the terminal device and may include but not limited to the following steps.

S601, BWPs configured for two or more uplink access procedures are determined.

S602, it is determined to perform a first uplink access procedure, and a first BWP corresponding to the first uplink access procedure is activated, in which the first uplink access procedure is any one of the two or more uplink access procedures.

For the relevant content of step S601 and step S602, reference should be made to the relevant introduction of the above embodiments, and details are not repeated herein.

S603, it is determined to hand over to a second uplink access procedure from the first uplink access procedure, and a second BWP corresponding to the second uplink access procedure is activated, and/or the first BWP is deactivated.

S604, a deactivation indication transmitted by a network device is received, in which the deactivation indication is used to indicate the terminal device to deactivate a currently activated BWP, and the currently activated BWP is configured for an uplink access procedure currently performed by the terminal device.

S605, a third BWP configured by the network device or agreed in a protocol is activated.

For the relevant content of step S603, step S604, and step S605, reference should be made to the relevant introduction of the above embodiments, and details are not repeated herein.

By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss.

Referring to FIG. 7, FIG. 7 is a schematic flowchart of a method for synchronizing BWPs according to some embodiments of the disclosure. As illustrated in FIG. 7, the method is performed by the network device and may include but not limited to the following step.

S701, BWPs for two or more uplink access procedures of the terminal device are configured, in which the uplink access procedures are performed by the terminal device on the respective configured BWPs.

Optionally, the uplink access procedures include the following types: a SDT procedure, an RACH SDT procedure, a CG SDT procedure, and a non-SDT uplink access procedure. According to the disclosure, the two and two uplink access procedures refer to any combination of two or more of the above-mentioned uplink access procedures.

As a possible implementation, the network device may configure the BWPs the for two or more uplink access procedures. Optionally, the network device transmits configuration information to the terminal device and the configuration information carries the BWPs of the two or more uplink access procedures. Optionally, the network device may respectively configure the BWPs for the two or more uplink access procedures through different configuration information.

Taking the configuration of the BWP of the CG SDT procedure as an example, the network device configures the CG resource of the CG SDT procedure of cell 1 to the terminal device and configures BWP1 for the CG resource, through the RRCRelease message. It should be noted that the network device may also configure the BWP of the conventional random access procedure of cell 1 as the initial BWP for the terminal device through the system information. Correspondingly, the terminal device may determine the CG resource of the CG SDT procedure and BWP1 corresponding to the CG resource from the RRCRelease message, that is, BWP1 for the CG SDT procedure is configured.

It should be noted that the terminal device in an idle state or a deactivated state works on the initial BWP configured by the network device, such as performing the connection establishment procedure or the connection resume procedure; and for the terminal device in an activated state, the network device may configure respective BWPs of the two or more uplink access procedures for the terminal device.

Optionally, each uplink access procedure may be configured with a BWP, and different uplink access procedures may be configured with different BWPs.

Optionally, the BWP includes at least one of uplink BWP indication information or downlink BWP indication information, and the BWP indication information includes at least one of a BWP identifier or a BWP type indication.

Optionally, when the network device configures the BWP for the terminal device, the initial state of the BWP may be specified in a protocol, for example, the initial state of the BWP configured for each uplink access procedure is determined in the protocol.

Optionally, when the network device configures the BWP for the terminal device, the network device may indicate the initial state of the BWP, for example, the state indication information is transmitted by the network device to the terminal device, and the state indication information is used to indicate the initial state of the configured BWP.

Optionally, the initial state of the BWP is one of an activated state, a deactivated state, or a dormant state.

According to embodiments of the disclosure, the BWPs are configured for the two or more uplink access procedures of the terminal device, in which the uplink access procedures are performed by the terminal device on the respective configured BWPs. By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss.

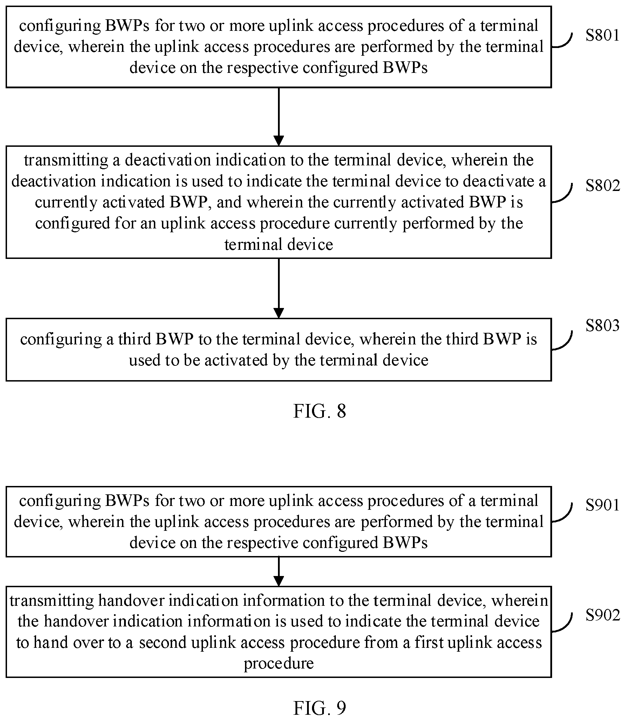

Referring to FIG. 8, FIG. 8 is a schematic flowchart of a method for synchronizing BWPs according to some embodiments of the disclosure. As illustrated in FIG. 8, the method is performed by the network device and may include but not limited to the following steps.

S801, BWPs for two or more uplink access procedures of the terminal device are configured, in which the uplink access procedures are performed by the terminal device on the respective configured BWPs.

For the relevant content of step S801, reference should be made to the relevant introduction of the above embodiments, and details are not repeated herein.

S802, a deactivation indication is transmitted to the terminal device, in which the deactivation indication is used to indicate the terminal device to deactivate a currently activated BWP, and the currently activated BWP is configured for an uplink access procedure currently performed by the terminal device.

In some implementations, when the currently activated BWP of the terminal device needs to be deactivated, the network device transmits the deactivation indication to the terminal device, in which the deactivation indication is used to indicate the terminal device to deactivate the currently activated BWP.

According to some embodiments of the disclosure, the currently activated BWP is a BWP configured for the uplink access procedure currently performed by the terminal device.

S803, a third BWP is configured to the terminal device, in which the third BWP is used to be activated by the terminal device.

After deactivating the current BWP, the terminal device needs to activate the third BWP to continue to communicate with the network device. Optionally, the third BWP may be agreed upon in the protocol, for example, the third BWP may be an initial BWP. Optionally, the third BWP may also be configured by the network device to the terminal device, for example, the network device configures the third BWP as the initial BWP to the terminal device. According to the disclosure, when the third BWP is the initial BWP, the terminal device may activate the initial BWP.

In some implementations, the terminal device performs the CG SDT procedure on BWP-1, and the terminal device receives the deactivation indication transmitted by the network device. The terminal device deactivates the currently activated BWP-1. If the third BWP configured by the network device or stipulated in the protocol is the initial BWP, the terminal device may activate the initial BWP.

In some implementations, the terminal device performs a random access procedure on initial BWP-2, and the terminal device receives the deactivation indication transmitted by the network device. The terminal device deactivates the currently activated initial BWP-2, and activates the initial BWP-1 according to the protocol agreement. If the third BWP configured by the network device or stipulated in the protocol is the initial BWP, the terminal device may activate the initial BWP.

By implementing according to embodiments of the disclosure, the terminal device may be confirmed to activate the corresponding BWP according to the performed uplink access procedure. In this way, for the network device and the terminal device, the understandings for the BWP frequency-domain resources used by the terminal device may be consistent, thereby avoiding the signal transmission loss. According to the disclosure, the situation that there are two activated BWPs at the same time may be avoided, and the waste of frequency-domain resources and the problem of easy loss of signal transmission may be avoided.

Referring to FIG. 9, FIG. 9 is a schematic flowchart of a method for synchronizing BWPs according to some embodiments of the disclosure. As illustrated in FIG. 9, the method is performed by the network device and may include but not limited to the following steps.

S901, BWPs for two or more uplink access procedures of the terminal device are configured, in which the uplink access procedures are performed by the terminal device on the respective configured BWPs.

For the relevant content of step S901, reference should be made to the relevant introduction of the above embodiments, and details are not repeated herein.

S902, handover indication information is transmitted to the terminal device, in which the handover indication information is used to indicate the terminal device to hand over to a second uplink access procedure from a first uplink access procedure

In some implementations, when the service applied by the terminal device changes, the uplink access procedure may change, and the network device transmits the handover indication information to the terminal device to indicate the terminal device to hand over to the second uplink access procedure from the first uplink access procedure.

Optionally, the RRC message may be used as the handover indication message. Optionally, the MAC CE or DCI may also be used as the handover indication message.

By implementing according to embodiments of the disclosure, the terminal device may be confirmed to activate the corresponding BWP according to the performed uplink access procedure. When the service applied by the terminal device changes, the BWP synchronization adjustment may also be maintained after the uplink access procedure handover. In this way, for the network device and the terminal device, the understandings for the BWP frequency-domain resources used by the terminal device may be consistent, thereby avoiding the signal transmission loss.

According to the above-mentioned embodiments in the disclosure, the methods according to embodiments of the disclosure are introduced from the perspectives of the network device and the first terminal device respectively. In order to realize the various functions in the methods according to the above-mentioned embodiments of the disclosure, the network device and the first terminal device may include hardware structures and software modules, and realize the above-mentioned functions in the form of hardware structures, software modules, or hardware structures plus software modules. A certain function among the above-mentioned functions may be implemented in the form of hardware structures, software modules, or hardware structures plus software modules.

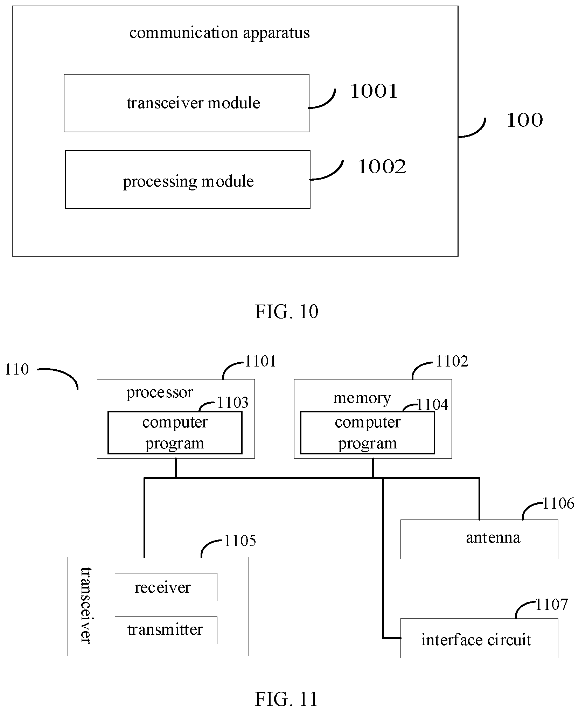

Referring to FIG. 10, FIG. 10 is a schematic block diagram of a communication apparatus according to some embodiments of the disclosure. The communication apparatus illustrated in FIG. 10 may include a transceiver module 1001 and a processing module 1002. The transceiver module 1001 may include a transmitting module and/or a receiving module. The transmitting module is used to realize the transmitting function, the receiving module is used to realize the receiving function, and the transceiver module 1001 may realize the transmitting function and/or the receiving function.

The communication apparatus 100 may be the terminal device (such as the first terminal device according to the foregoing method embodiments), may also be a device in the terminal device, and may also be a device that may be matched and used with the terminal device. Alternatively, the communication apparatus 100 may be the network device, or a device in the network device, or a device that may be matched with the network device.

The communication apparatus 100 is the terminal device (such as the first terminal device according to the foregoing method embodiments), including the following.

The processing module 1002 is configured to determine BWPs configured for two or more uplink access procedures; and determine to perform a first uplink access procedure, and activate a first BWP corresponding to the first uplink access procedure, in which the first uplink access procedure is any one of the two or more uplink access procedures.

By implementing according to embodiments of the disclosure, the terminal device may be confirmed to activate the corresponding BWP according to the performed uplink access procedure. When the service applied by the terminal device changes, the BWP synchronization adjustment may also be maintained after the uplink access procedure handover. In this way, for the network device and the terminal device, the understandings for the BWP frequency-domain resources used by the terminal device may be consistent, thereby avoiding the signal transmission loss.

The processing module 1002 is further configured to deactivate a BWP that is in an activated state before performing the first uplink access procedure.

The processing module 1002 is further configured to determine to hand over to a second uplink access procedure from the first uplink access procedure, and activate a second BWP corresponding to the second uplink access procedure, and/or deactivate the first BWP.

The communication apparatus 100 also includes the following.

The transceiver module 1001 is configured to receive a deactivation indication transmitted by a network device, in which the deactivation indication is used to indicate the terminal device to deactivate a currently activated BWP, and the currently activated BWP is configured for an uplink access procedure currently performed by the terminal device.

The processing module 1002 is further configured to activate a third BWP configured by the network device or agreed in a protocol.

The processing module 1002 is further configured to monitor a handover trigger event, and determine to hand over to the second uplink access procedure from the first uplink access procedure under a case that the handover trigger event is monitored.

In a possible implementation, the handover trigger event includes at least one of the following: receiving handover indication information transmitted by a network device, in which the handover indication information is used to indicate the terminal device to hand over to the second uplink access procedure from the first uplink access procedure; monitoring that a measurement result of the first uplink access procedure no longer satisfies a measurement threshold for selecting the first uplink access procedure; or monitoring that a number of uplink transmission failures of the first uplink access procedure reaches a threshold.

In a possible implementation, the first BWP and the second BWP overlap.

In a possible implementation, different uplink access procedures are configured with different BWPs.

In a possible implementation, the configured BWP is a BWP used when the terminal device is in an idle state or a deactivated state.

In a possible implementation, the uplink access procedure includes any of the following: a SDT procedure; an RACH SDT procedure; a CG SDT procedure; or a non-SDT uplink access procedure.

In a possible implementation, the BWP includes at least one of uplink BWP indication information or downlink BWP indication information.

In a possible implementation, the BWP indication information includes at least one of a BWP identifier or a BWP type indication.

The transceiver module 1001 is further configured to receive a BWP configured by a network device for each uplink access procedure.

The transceiver module 1001 is further configured to determine an initial state of the BWP configured for each uplink access procedure according to a protocol agreement; or receive state indication information transmitted by the network device, in which the state indication information is used to indicate the initial state of the BWP configured.

In a possible implementation, the initial state of the BWP is one of an activated state, a deactivated state, or a dormant state.

The processing module 1002 is further configured to determine that the terminal device is in an idle state or a deactivated state, and determine a currently activated BWP as a BWP where the terminal device currently resides.

The processing module 1002 is further configured to determine that the terminal device is in an idle state or a deactivated state, and perform, on a specified BWP, a cell measurement on a cell where the terminal device resides, in which the specified BWP includes one of an initial BWP, a currently activated BWP, or a protocol-agreed BWP.

The communication apparatus 100 is the network device, including the following.

The processing module 1001 is configured to configure BWPs for two or more uplink access procedures of a terminal device, in which the uplink access procedures are performed by the terminal device on the respective configured BWPs.

By implementing according to embodiments of the disclosure, the terminal device may be confirmed to activate the corresponding BWP according to the performed uplink access procedure. When the service applied by the terminal device changes, the BWP synchronization adjustment may also be maintained after the uplink access procedure handover. In this way, for the network device and the terminal device, the understandings for the BWP frequency-domain resources used by the terminal device may be consistent, thereby avoiding the signal transmission loss.

The communication apparatus 100 also includes the following.

The transceiver module 1001 is further configured to transmit a deactivation indication to the terminal device, in which the deactivation indication is used to indicate the terminal device to deactivate a currently activated BWP, and the currently activated BWP is configured for an uplink access procedure currently performed by the terminal device.

The processing module 1002 is configured to configure a third BWP to the terminal device, in which the third BWP is used to be activated by the terminal device.

The transceiver module 1001 is further configured to transmit handover indication information to the terminal device, in which the handover indication information is used to indicate the terminal device to hand over to a second uplink access procedure from a first uplink access procedure.

In a possible implementation, the first BWP and the second BWP overlap.

In a possible implementation, different uplink access procedures are configured with different BWPs.

In a possible implementation, the configured BWP is a BWP used when the terminal device is in an idle state or a deactivated state.

In a possible implementation, the uplink access procedure includes any of the following: a SDT procedure; an RACH SDT procedure; a CG SDT procedure; or a non-SDT uplink access procedure.

In a possible implementation, the BWP includes at least one of uplink BWP indication information or downlink BWP indication information.

In a possible implementation, the BWP indication information includes at least one of a BWP identifier or a BWP type indication.

The transceiver module 1001 is further configured to transmit state indication information to the terminal device, in which the state indication information is used to indicate an initial state of the configured BWP.

Referring to FIG. 11, FIG. 11 is a schematic block diagram of a communication device 110 according to some embodiments of the disclosure. The communication device 110 may be a network device, or a terminal device (such as the first terminal device according to the aforementioned method embodiments), or a chip, a chip system or a processor that supports the network device to implement the above methods, or a chip, a chip system or a processor that supports the terminal device to implement the above methods, or the like. The device may be used to implement the methods described according to the foregoing method embodiments, and for details, reference may be made to the descriptions according to the foregoing method embodiments.

The communication device 110 may include one or more processors 1101. The processor 1101 may be a general-purpose processor, a special-purpose processor, or the like. For example, it may be a baseband processor or a central processing unit. The baseband processor may be used to process communication protocols and communication data. The central processing unit may be used to control the communication device (such as a base station, a baseband chip, a terminal device, a terminal device chip, a DU, a CU, or the like), execute a computer program, process data of the computer program, and the like.

Optionally, the communication device 110 may further include one or more memories 1102 on which a computer program 1104 may be stored. The processor 1101 executes the computer program 1104, so that the communication device 110 executes the methods described according to the above method embodiments. Optionally, data may also be stored in the memory 1102. The communication device 110 and the memory 1102 may be provided separately or integrated together.

Optionally, the communication device 110 may further include a transceiver 1105 and an antenna 1106. The transceiver 1105 may be referred to as a transceiver unit, a transceiver, a transceiver circuit, or the like, which is used to implement a transceiver function. The transceiver 1105 may include a receiver and a transmitter. The receiver may be called a receiver or a receiving circuit or the like, for implementing a receiving function. The transmitter may be called a transmitter or a transmitting circuit or the like for implementing a transmitting function.

Optionally, the communication device 110 may further include one or more interface circuits 1107. The interface circuit 1107 is used to receive code instructions and transmit them to the processor 1101. The processor 1101 executes the code instructions to cause the communication device 110 to perform the methods described according to the above method embodiments.

The communication device 110 is a terminal device (such as the first terminal device according to the above embodiments): the processor 1101 is used for executing steps S201 and S202 in FIG. 2; steps S301, S302 and S304 in FIG. 3; steps S401, S402 and S403 in FIG. 4; steps S501, S502, S503 and S504 in FIG. 5; and steps S601, S602, S603 and S605 in FIG. 6. The transceiver 1005 is used for executing step S303 in FIG. 3 and step S604 in FIG. 6.

The communication device 110 is a network device: the transceiver 1105 is used to execute step S802 in FIG. 8 and step S902 in FIG. 9. The processor 1101 is configured to execute step S701 in FIG. 7; step S801 and step S803 in FIG. 8; and step S901 in FIG. 9.

In an implementation, the processor 1101 may include a transceiver for implementing receiving and transmitting functions. For example, the transceiver may be a transceiver circuit, or an interface, or an interface circuit. The transceiver circuit, or the interface, or the interface circuit for implementing receiving and transmitting functions may be separate or integrated. The above-mentioned transceiver circuit, interface, or interface circuit may be used for reading and writing code/data, or the above-mentioned transceiver circuit, interface, or interface circuit may be used for signal transmission.

In an implementation manner, the processor 1101 may store a computer program 1103, and the computer program 1103 runs on the processor 1101 to enable the communication device 110 to execute the methods described according to the above method embodiments. The computer program 1103 may be embodied in the processor 1101, in which the processor 1101 may be implemented by hardware.

In an implementation manner, the communication device 110 may include a circuit. The circuit may implement the functions of sending or receiving or communicating in the foregoing method embodiments. The processor and the transceiver described in the disclosure may be implemented in an integrated circuits (IC), an analog IC, a radio frequency integrated circuit (RFIC), a mixed-signal IC, an application specific integrated circuit (ASIC), a printed circuit board (PCB), electronic equipment, or the like. The processor and the transceiver may also be fabricated using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device but the scope of the communication device described in the disclosure is not limited thereto and the structure of the communication device may not be limited by FIG. 11. The communication device may be a stand-alone device or part of a larger device. For example, the communication means may be:
(1) a stand-alone IC, or a chip, or a chip system, or a chip subsystem;
(2) a set of one or more ICs, optionally, the set may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handset, a mobile unit, an in-vehicle device, a network device, a cloud device, an artificial intelligence device, etc.;
(6) others.

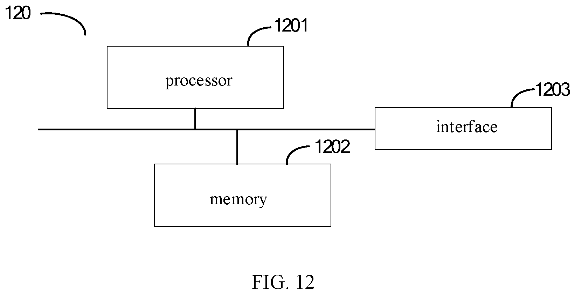

For the case that the communication device may be the chip or the chip system, reference may be made to the schematic structural diagram of the chip in FIG. 12. The chip in FIG. 12 includes a processor 1201 and an interface 1202. The number of processors 1201 may be one or more and the number of interfaces 1202 may be multiple.

For the case where the chip is used to implement functions of the terminal device (such as the first terminal device according to the foregoing method embodiments) according to the embodiments of the disclosure:

The interface 1202 is configured to execute step S303 in FIG. 3 and step S604 in FIG. 6.

For the case where the chip is used to implement functions of the network device according to the embodiments of the disclosure:
The interface 1202 is used to execute step S802 in FIG. 8 and step S902 in FIG. 9.

Optionally, the chip further includes a memory 1203. The memory 1203 is used to store necessary computer programs and data.

Those skilled in the art may also understand that various illustrative logical blocks and steps listed in the embodiments of the disclosure may be implemented in electronic hardware, computer software, or a combination thereof. Whether such function is implemented in hardware or software depends on specific applications and overall system design requirements. Those skilled in the art may use various manners to implement functions for each specific application, but such implementation should not be understood as exceeding the protection scope of the embodiments of the disclosure.

Some embodiments of the disclosure further provide a system for synchronizing BWPs. The system includes a communication apparatus as a terminal device (such as the first terminal device according to the foregoing method embodiments) and a communication apparatus as a network device according to the embodiments in FIG. 10, or, the system includes a communication device as a terminal device (such as the first terminal device according to the foregoing method embodiments) and a communication device as a network device according to the embodiments in FIG. 11.

The disclosure also provides a computer-readable storage medium on which instructions are stored, and when the instructions are executed by a computer, functions according to any of the above method embodiments are realized.

The disclosure also provides a computer program product, which realizes functions according to any of the above method embodiments when the computer program product is executed by a computer.

In the above-mentioned embodiments, it may be implemented in whole or in part by software, hardware, firmware, or any combination thereof. When it is implemented in software, it may be implemented in whole or in part in a form of computer program product. The computer program product includes one or more computer programs. When the computer programs are loaded and executed on the computer, flows or functions according to the embodiments of the disclosure may be generated in whole or in part. The computer may be a general purpose computer, a special purpose computer, a computer network, or other programmable device. The computer programs may be stored on a computer-readable storage medium or transferred from one computer-readable storage medium to another computer-readable storage medium, for example, the computer programs may be transferred from a website site, a computer, a server, or a data center over a wire (e.g. coaxial cable, optical fiber, digital subscriber line (DSL)) or wireless (e.g. infrared, wireless, microwave) means to another website site, another computer, another server, or another data center. The computer-readable storage medium may be any available medium that may be accessed by a computer or a data storage device such as a server, a data center, or the like that includes an integration of one or more available media. The available medium may be a magnetic medium (e.g., floppy disk, hard disk, magnetic tape), an optical medium (e.g., high-density digital video disc (DVD)), a semiconductor medium (e.g., solid state disk (SSD)), or the like.

Those skilled in the art may understand that the first, second, and other numeral numbers involved in the disclosure are only for the convenience of description, and are not used to limit the scope of the embodiments of the disclosure, which also represent a sequence.

At least one in this disclosure may also be described as one or more, which is not limited in this disclosure. A plurality of or multiple in this disclosure may be two, three, four, or more, which is not limited in this disclosure. In the embodiments of the disclosure, for a type of technical features, the technical features are distinguished by "first", "second", "third", "A", "B", "C" and "D", etc. There is no order or order of magnitude for the technical features described in "first", "second", "third", "A", "B", "C" and "D", etc.

The corresponding relationships shown in each table in this disclosure may be configured or predefined. Information values in each table are only examples and may be configured with other values, which are not limited in this disclosure. When configuring the corresponding relationships between the information and each parameter, it is not necessarily required to configure all the corresponding relationships indicated in each table. For example, in each table in this disclosure, the corresponding relationships shown in some rows may not be configured. For another example, appropriate deformation adjustments may be made based on each table, such as splitting, merging. The names of the parameters shown in the headings in each tables may also adopt other names that may be understood by the communication device, and the values or representations of the parameters may also be other values or representations that the communication device may understand. When each table is implemented, other data structures may also be used, for example, an array, a queue, a container, a stack, a linear table, a pointer, a link list, a tree, a graph, a structure, a class, a heap, a hash table, or the like.

Predefined in this disclosure may be understood as defined, predefined, stored, prestored, pre-negotiated, pre-configured, cured, or pre-fired.

Those skilled in the art may realize that units and algorithm steps of each example described in conjunction with the embodiments disclosed herein may be implemented in electronic hardware, or a combination of computer software and electronic hardware. Whether these functions are performed in hardware or software depends on the specific applications and design constraints of the technical solutions. Those skilled in the art may implement the described functions using different methods for each particular application, but such implementations should not be considered beyond the scope of this disclosure.

Those skilled in the art may clearly understand that, for the convenience and brevity of description, the specific working processes of the above-described systems, devices, and units may refer to the corresponding processes in the foregoing method embodiments, which will not be repeated herein.

The above are only specific implementations of the disclosure, but the scope of the disclosure is not limited to this. Those skilled in the art who is familiar with the technical scope disclosed in the disclosure may easily think of changes or replacements, which should cover within the scope of this disclosure. Therefore, the scope of the disclosure shall be subject to the scope of the claims.

## Claims

1. A method for synchronizing bandwidth parts (BWPs), performed by a terminal device, the method comprising:
determining BWPs configured for two or more uplink access procedures; and
determining to perform a first uplink access procedure, and activating a first BWP corresponding to the first uplink access procedure, wherein the first uplink access procedure is any one of the two or more uplink access procedures.

2. The method according to claim 1, further comprising:
deactivating a BWP that is in an activated state before performing the first uplink access procedure.

3. The method according to claim 1, further comprising:
determining to hand over to a second uplink access procedure from the first uplink access procedure, and activating a second BWP corresponding to the second uplink access procedure, and/or deactivating the first BWP.

4. The method according to claim 1 or 3, further comprising:
receiving a deactivation indication transmitted by a network device, wherein the deactivation indication is used to indicate the terminal device to deactivate a currently activated BWP, and wherein the currently activated BWP is configured for an uplink access procedure currently performed by the terminal device; and
activating a third BWP configured by the network device or agreed in a protocol.

5. The method according to claim 3, further comprising:
monitoring a handover trigger event, and determining to hand over to the second uplink access procedure from the first uplink access procedure under a case that the handover trigger event is monitored; wherein the handover trigger event comprises at least one of:
receiving handover indication information transmitted by a network device, wherein the handover indication information is used to indicate the terminal device to hand over to the second uplink access procedure from the first uplink access procedure;
monitoring that a measurement result of the first uplink access procedure no longer satisfies a measurement threshold for selecting the first uplink access procedure; or
monitoring that a number of uplink transmission failures of the first uplink access procedure reaches a threshold.

6. The method according to any one of claims 3 to 5, wherein the first BWP and the second BWP overlap.

7. The method according to any one of claims 1 to 5, wherein different uplink access procedures are configured with different BWPs.

8. The method according to claim 7, wherein the configured BWP is a BWP used when the terminal device is in an idle state or a deactivated state.

9. The method according to any one of claims 1 to 6, wherein the uplink access procedure comprises any of:
a small data transmission (SDT) procedure;
a random access channel (RACH) SDT procedure;
a configure grant (CG) SDT procedure; or
a non-SDT uplink access procedure.

10. The method according to any one of claims 1 to 5, wherein the BWP comprises at least one of uplink BWP indication information or downlink BWP indication information.

11. The method according to claim 10, wherein the BWP indication information comprises at least one of a BWP identifier or a BWP type indication.

12. The method according to claim 1, further comprising:
receiving a BWP configured by a network device for each uplink access procedure.

13. The method according to claim 1 or 12, further comprising:
determining an initial state of the BWP configured for each uplink access procedure according to a protocol agreement; or
receiving state indication information transmitted by the network device, wherein the state indication information is used to indicate the initial state of the BWP configured.

14. The method according to claim 13, wherein the initial state of the BWP is one of an activated state, a deactivated state, or a dormant state.

15. The method according to claim 1 or 3, further comprising:
determining that the terminal device is in an idle state or a deactivated state, and determining a currently activated BWP as a BWP where the terminal device currently resides.

16. The method according to claim 1 or 3, further comprising:
determining that the terminal device is in an idle state or a deactivated state, and performing, on a specified BWP, a cell measurement on a cell where the terminal device resides, wherein the specified BWP comprises one of an initial BWP, a currently activated BWP, or a protocol-agreed BWP.

17. A method for synchronizing bandwidth parts (BWPs), performed by a network device, the method comprising:
configuring BWPs for two or more uplink access procedures of a terminal device, wherein the uplink access procedures are performed by the terminal device on the respective configured BWPs.

18. The method according to claim 17, further comprising:
transmitting a deactivation indication to the terminal device, wherein the deactivation indication is used to indicate the terminal device to deactivate a currently activated BWP, and wherein the currently activated BWP is configured for an uplink access procedure currently performed by the terminal device.

19. The method according to claim 18, further comprising:
configuring a third BWP to the terminal device, wherein the third BWP is used to be activated by the terminal device.

20. The method according to claim 17, further comprising:
transmitting handover indication information to the terminal device, wherein the handover indication information is used to indicate the terminal device to hand over to a second uplink access procedure from a first uplink access procedure.

21. The method according to claim 20, wherein the first BWP and the second BWP overlap.

22. The method according to claim 17, wherein different uplink access procedures are configured with different BWPs.

23. The method according to claim 17, wherein the configured BWP is a BWP used when the terminal device is in an idle state or a deactivated state.

24. The method according to any one of claims 17 to 23, wherein the uplink access procedure comprises any of:
a small data transmission (SDT) procedure;
a random access channel (RACH) SDT procedure;
a configure grant (CG) SDT procedure; or
a non-SDT uplink access procedure.

25. The method according to any one of claims 17 to 23, wherein the BWP comprises at least one of uplink BWP indication information or downlink BWP indication information.

26. The method according to claim 25, wherein the BWP indication information comprises at least one of a BWP identifier or a BWP type indication.

27. The method according to claim 23, further comprising:
transmitting state indication information to the terminal device, wherein the state indication information is used to indicate an initial state of the configured BWP.

28. A communication apparatus, comprising:
a processing module, configured to determine BWPs configured for two or more uplink access procedures; and determine to perform a first uplink access procedure, and activate a first BWP corresponding to the first uplink access procedure, wherein the first uplink access procedure is any one of the two or more uplink access procedures.

29. A communication apparatus, comprising:
a processing module, configured to configure BWPs for two or more uplink access procedures of a terminal device, wherein the uplink access procedures are performed by the terminal device on the respective configured BWPs.

30. A communication device, comprising a processor and a memory, wherein a computer program is stored in the memory, and the processor is configured to execute the computer program stored in the memory, so that the device performs the method according to any one of claims 1 to 16.

31. A communication device, comprising a processor and a memory, wherein a computer program is stored in the memory, and the processor is configured to execute the computer program stored in the memory, so that the device performs the method according to any one of claims 17 to 27.

32. A communication device, comprising a processor and an interface circuit; wherein
the interface circuit is configured to receive code instructions and transmit them to the processor; and
the processor is configured to execute the code instructions to perform the method according to any one of claims 1 to 16.

33. A communication device, comprising a processor and an interface circuit; wherein
the interface circuit is configured to receive code instructions and transmit them to the processor; and
the processor is configured to execute the code instructions to perform the method according to any one of claims 17 to 27.

34. A computer-readable storage medium for storing instructions that when executed, cause the method according to any one of claims 1 to 16 to be performed.

35. A computer-readable storage medium for storing instructions that when executed, cause the method according to any one of claims 17 to 27 to be performed.
